# EUROPEAN PATENT APPLICATION

(11) **EP 4 782 100 A1**
(43) Date of publication of application: **29.07.2026**
(21) Application number: 25220235.3
(22) Date of filing: 02.12.2025
(51) Int. Cl.: B01J 19/18, B01J 37/02

(54) **PISTON REACTOR FOR DEPOSITING NANOPARTICLES ON STRUCTURED SUBSTRATES**

(30) Priority: 02.12.2024 US 202463726800 P
(71) Applicant: Hamad Bin Khalifa University (HBKU), Doha (QA)
(72) Inventor: Al-Rawashdeh, Ma'moun, 34110 Doha (QA); Ashok, Anchu, 34110 Doha (QA); Fischer, Kai, 34110 Doha (QA)
(74) Representative: K&L Gates LLP

(57) **Abstract**

The present disclosure provides for a piston reactor for depositing nanoparticles on structured substrates. According to one aspect of the present disclosure a piston reactor for depositing nanoparticles on structured substrates. According to a second aspect of the present disclosure a method of using a piston reactor for depositing nanoparticles on structured substrates.

## Description

### PRIORITY CLAIM AND CROSS-REFERENCE TO RELATED APPLICATIONS

The present application claims priority to and the benefit of U.S. Provisional Patent Application No. 63/726,800 filed December 2, 2024, which is incorporated herein by reference in its entirety and relied upon.

### BACKGROUND

Supported catalysts find applications in numerous industrial processes, such as petroleum refining, petrochemical production, environmental remediation, fine chemicals synthesis, and emission control in automotive catalytic converters. The choice of support material and catalytic species is tailored to the specific reaction requirements and desired catalytic performance in each application. The support material provides mechanical and thermal stability and prevents the agglomeration or sintering of the catalytic nanoparticles during the reaction, leading to improved catalyst performance. The synthesis of supported metal catalysts involves the deposition of the catalytically active metal nanoparticle species onto a structured support material. This technique is crucial for optimizing the performance, stability, and selectivity of the catalysts as demonstrated by various industrial applications.

Several techniques are employed for the deposition of nanoparticles onto structured supports that can be used as a catalyst, each offering advantages and limitations. The choice of method depends on the specific requirements of the catalytic system and the desired characteristics of the supported catalyst. Impregnation, incipient wetness impregnation, co-precipitation, sol-gel method, atomic layer deposition, electrodeposition, chemical vapor deposition, in-situ synthesis, and flame synthesis are some common techniques for the deposition of catalysts on structured supports. Among these, flame synthesis is the most used technique for high-temperature systems. The catalysts are exposed to elevated temperatures to ensure that thermal stability for the catalyst is maintained when carrying out the chemical reactions at that high temperature. While flame synthesis offers several advantages, it also has limitations. Limited control over nanoparticle size and distribution, agglomeration and sintering, limited control over catalyst composition, inhomogeneous coating, limited scalability, risk of catalyst aggregation, and limited control over catalyst support interaction are the common challenges associated with this synthesis method. The other high-temperature route is solution combustion synthesis. Although this technique prepares catalysts with unique promising properties, it has key challenges as to how to scale up this preparation method at an industrial scale. This is due to the safety, and toxic nature of the chemistry associated with this preparation method, and the difficulty of getting good homogeneity of conditions at the larger scale. There is a need for technology that allows to solve many of the existing limitations on the high-temperature synthesis for the deposition of nanoparticles on the structured supports in a more controlled and cost-effective manner.

As such, there is a need for a piston reactor for depositing nanoparticles on structured substrates.

### SUMMARY

The present disclosure provides for a piston reactor for depositing nanoparticles on structured substrates.

According to one non-limiting aspect of the present disclosure, an exemplary embodiment of a piston reactor for depositing nanoparticles on structured substrates.

According to one non-limiting aspect of the present disclosure, an exemplary embodiment of a system for depositing nanoparticles on structured substrates.

According to a second non-limiting aspect of the present disclosure, an exemplary embodiment of a method of using a piston reactor for depositing nanoparticles on structured substrates.

Additional features and advantages are described in, and will be apparent from, the following Detailed Description. The features and advantages described herein are not all-inclusive and, in particular, many additional features and advantages will be apparent to one of ordinary skill in the art in view of the description. In addition, any particular embodiment does not have to have all of the advantages listed herein and it is expressly contemplated to claim individual advantageous embodiments separately. Moreover, it should be noted that the language used in the specification has been selected principally for readability and instructional purposes, and not to limit the scope of the inventive subject matter.

### BRIEF DESCRIPTION OF THE FIGURES

Fig. 1 illustrates a piston reactor unit to coat particles on a structured support, according to an example embodiment of the present disclosure;
Fig. 2 illustrates (a) fresh Cu foam, before and after coating with carbon, and carbon-Ni nanoparticles after adhesive test; (b) XRD profile of fresh Cu foam, carbon/Cu foam and Ni/Cu foam, inset shows the zoomed XRD profile of fresh Cu foam, carbon/Cu foam and Ni/Cu foam between 44-45°; (c) XPS Ni 2p spectrum of Ni/Cu Foam; (d) SEM-EDX image of the coated sample; and (e-h) elemental composition of Ni, Cu, C and O in the coated sample, according to an example embodiment of the present disclosure;
Fig. 3 illustrates (a) XRD image of the fresh carbon paper and Ni coated carbon paper, insert shows the zoomed area from 35-70° of XRD spectrum; (b) SEM image of the fresh carbon paper; and (c) SEM image of the Ni particle coated carbon paper from the outlet of the piston reactor, according to an example embodiment of the present disclosure;
Fig. 4 illustrates OER polarization curves and Tafel plots for commercial Cu and Ni foam and Ni/Cu foam from piston reactors, according to an example embodiment of the present disclosure;
Fig. 5 illustrates a flow diagram for a system for depositing nanoparticles on structured substrates where the reactive mixture and the oxidative agents are directly feed into the combustion chamber, according to an example embodiment of the present disclosure;
Fig. 6 illustrates a flow diagram for a system for depositing nanoparticles on structured substrates using mixture unit in the inlet part for mixing reactive mixture and the oxidative agent before reaching the combustion chamber, according to an example embodiment of the present disclosure;
Fig. 7 illustrates XPS C 1s profile of a) Carbon/Cu foam b) Ni/Cu foam, according to an example embodiment of the present disclosure;
Fig. 8 illustrates SEM images of cross sections showing coating thickness, according to an example embodiment of the present disclosure;
Fig. 9 illustrates an LSV curve of Ni/Cu foam prepared from two different batches at the same condition, according to an example embodiment of the present disclosure.

### DETAILED DESCRIPTION

The present disclosure generally relates to a piston reactor for depositing nanoparticles on structured substrates.

The disclosed technology presents a distinctive method for tackling the significant challenge in high-temperature synthesis recipes for depositing nanoparticles to structured supports, especially for those used to make nanoparticle-supported catalysts. The disclosed technology presents a novel approach for fabricating nanoparticles deposited on structured substrate using a high-temperature synthesis route in a piston reactor. This approach employs a piston reactor which resembles a conventional internal combustion engine. The nanoparticle precursor is formulated in a liquid solution that is used as fuel for the piston reactor. The piston reactor incorporates the precursor at the point where liquid fuel is traditionally introduced in the engine. The fuel goes through a high-temperature combustion inside the piston chamber. The exhaust gas with the formed solid nanoparticles will pass over a trap system just after the piston combustion chamber. This trap holds the structured support where the nanoparticles are deposited on it. The final product is then prepared which can be used for many potential catalytic applications such as those of high temperature and electrochemical reaction applications.

The invention uses piston reactor technology which is an advanced type of reactor system that combines mechanical, electrical, and chemical principles to facilitate various processes, including chemical reactions, material synthesis, and energy conversion. The disclosed technology uses a conventional internal combustion engine as the piston reactor. The combustion in the piston chamber operates as a semi-continuous chemical reactor with a very high rate of repeated compression-reaction-and expansion cycles enabled by the high rotation speed (RPM) of the piston reciprocated movement. Instead of using conventional liquid fuel with this piston to do the combustion, a custom-designed liquid fuel is prepared which contains the nanoparticles precursor. This solution is added and used in the same location as the fuel used in a typical engine. The high-temperature combustion of the liquid solution will produce nanoparticles in the piston chamber. The gas that is generated by this combustion will contain the nanoparticles. A trap is installed right after the piston chamber. The structured substrate is placed in that trap. When the exhaust high-temperature gas stream passes over the structured substrate, the nanoparticles are deposited on the structured support resulting in a homogeneous coating with strong adhesion of the nanoparticles to the structured support.

The unique features of this approach are enabled because of the unique operation mode of the piston reactor. The fast (adiabatic compression) heating at temperatures exceeding 1500K and high pressure along with the fast cooling in the piston cycle allows the production of nanoparticles with high thermal stability and less agglomeration. The piston reactor incorporates a movable piston within the reaction chamber, which allows for precise control of pressure, temperature, and mixing during the reaction. This enables the precursors to get combusted uniformly and improve yields and selectivity. The dynamic piston movement enhances mixing and mass transfer within the reaction mixture, leading to faster and more uniform synthesis. The fast cooling during the expansion phase reduces the temperature quickly, which quenches the reaction to produce more uniform nanoparticles and minimize the degree of agglomeration. The piston reactor design ensures excellent enclosure of the containment and safety during high-pressure-temperature reactions, thus the exothermicity during the combustion process is well controlled. Part of the exothermic energy is translated into mechanical movement which enables carrying out the reaction in a safer way. Because of the continuous operation of the piston reactor, the disclosed reactor technology can be scaled up for industrial applications, making it a valuable tool for large-scale production. The quality of the product is maintained because the reaction takes place in the relatively small piston combustion chamber, while the high RPM of the piston reciprocated movement, enables realizing high production capacity, while not compromising on the quality inside the combustion chamber.

The advantages of the disclosed technology can be benchmarked against the following three state-of-the-art synthesis technology practices: (1) the first practice is the use of the piston reactor for nanoparticle synthesis. This option is reported in the literature but only for a few limited studies. All of them aim at the production of nanoparticles that are not supported by any substrate. The following nanoparticles have been reported: nanosized silicon structures, carbon nanoparticles, and magnetic carbon composites. The collecting and processing of unsupported nanoparticles from the piston reactor is a challenging task from a safe and practical perspective. Additionally, in the field of heterogeneous catalysis, the nanoparticles are supported on a solid substrate which acts as a carrier for the active metal species, providing a large surface area for the catalytic reaction to take place. In the disclosed technology, both of these features are achieved. That is to make nanoparticles deposited on structured support at a large scale suitable for catalytic applications.

(2) The second practice is the route to prepare catalysts at high temperatures as flame and solution combustion synthesis. Both of these methods are promising for preparing catalysts and have been well-reported in the open literature. The main drawbacks of these two methods are the scale-up to reach the desired target production capacity, safety limitations, and limitations on the type/shape of support. In the disclosed technology, advancement is reached on how to safely process high temperature (combustion) synthesis routes, and be able to increase production capacity, for a wider range of substrates, and nanomaterials.

(3) The third type of practice to benchmark the disclosed technology is conventional coating techniques for structure-supported catalysts such as impregnation, suspension, sol-gel synthesis, chemical vapor deposition, and electro-deposition. These are the practices used to prepare the most commercially supported structured catalysts. Many review articles in the open literature are available that summarize the advantages and disadvantages use of each of them. All of these techniques consist of many sequence steps such as substrate preparation, depositing active material on support, and ending mostly with a thermal treatment step. These sequence steps have unique advantages in controlling the target properties of the final catalyst. The disclosed technology is different than those techniques as it is closer to a one-pot synthesis route. It also uses a different chemistry and approach for the deposition which can generate catalysts supports differently than what is prepared with these conventional methods. This opens the room for making catalysts with different unique technical properties and economic savings.

In one example, a commercial 4-stroke conventional internal engine is being modified and used as a piston reactor. Commercial metal copper foam substrate has been placed in the trap section which is positioned exactly after the combustion chamber. A nickel nitrate precursor solution is prepared in a methanol solvent. The liquid solution was connected to the inlet of the piston reactor similar to the conventional fuel of the engine. The combustion settings were fixed and tuned before the nickel nitrate was added to the methanol solution. The deposition of the nickel nanoparticles on the metal copper foam substrate started directly when the combustion took place in the piston reactor using the nickel nitrate precursor solution. This step continued for a specified amount of time to get the required depositions on the metal foam substrate. Several characterizations have been carried out to confirm the quality of nickel nanoparticle deposition on the metal copper foam. The catalytic activity of the supported metal copper foam was confirmed using a model reaction for electrochemical chemistry demonstrating excellent performance.

In the end, the disclosed technology envisioned producing a new heterogeneous catalyst in the market as the final commercial product. Catalysts are the central component of most chemical reactors used in most industrial chemical processes. Current commercial catalysts can be offered and sold alone to different end users, heterogeneous catalyst can be sold as part of a reactor technology, or as part of a complete chemical process solution. All of these are potential commercial outlets for the new catalyst prepared by the disclosed technology. Potential target industries that can be explored and assessed are those that use catalysts at high-temperature such as the production of hydrogen from hydrocarbon feedstock via high-temperature reforming reactions, such a process is available in every refinery, ammonia, and methanol plants. The other potential industries are catalysts used in emission control for environmental applications such as those used in power plants, automotive, ships, and offshore industries. The other type of industries are those that use electrochemical reactions at an industrial scale. Such a route is becoming very important for the future considering many chemical processes will be operating using renewable electricity. Two main applications that could be very promising to explore are the electrolyzers to make hydrogen and CO2 electrochemical conversion.

The disclosed technology offers the possibility of coating and depositing nanoparticles on structured substrates. Catalysts are one main potential product that can benefit from this technique. However, there could be other application areas that could benefit from this technique.

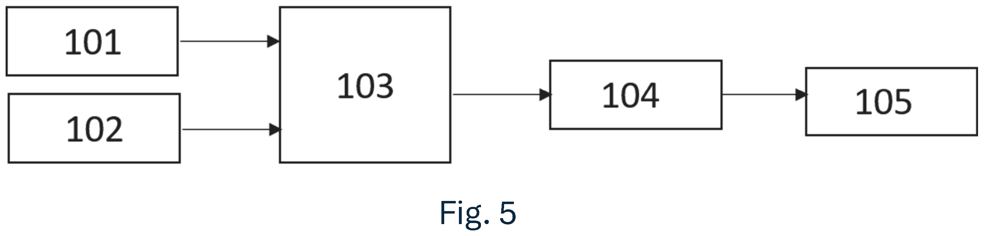

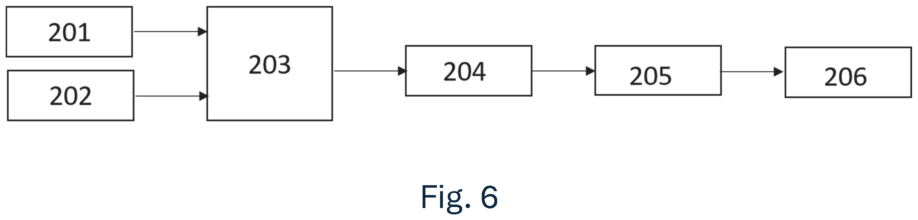

Figure 5 illustrates a flow diagram of a system with the direct feed of reactive mixture and oxidizing agent into the combustion chamber for depositing carbon nanoparticle and metal nanoparticle on a structured substrate. As seen in Figure 5, the system includes reactive solution 101, an oxidizing agent 102, a combustion chamber 103, a trapping unit 104 and an exhaust unit 104. Figure 6 illustrate a flow diagram of a system with mixing unit for reactive solution and oxidizing agent in the inlet part for depositing carbon nanoparticles and metal nanoparticle on a structured substrate. As seen in Figure 6, the system includes reactive solution 201, an oxidizing agent 202, a mixing unit 203, a combustion chamber 204, a trapping unit 205 and an exhaust unit 205.

### EXPERIMENTAL SUPPORT:

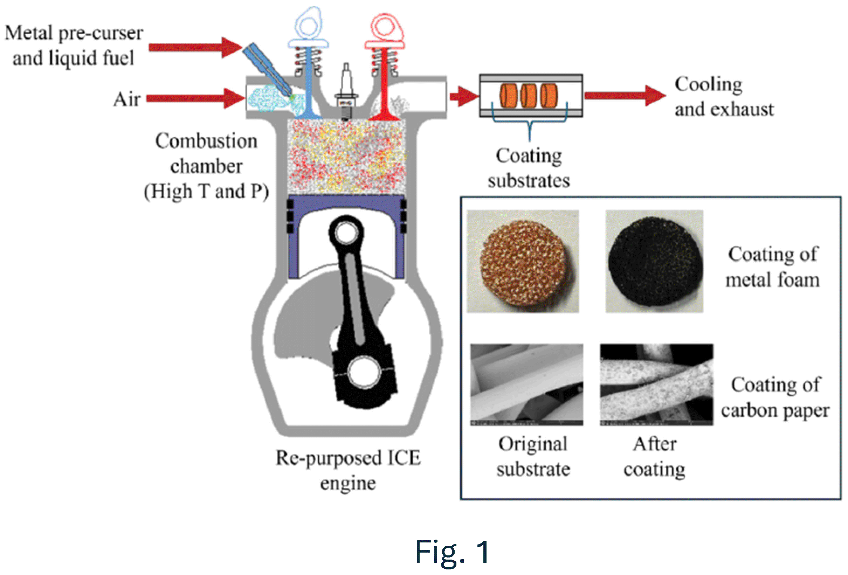

Materials: Nickel (II) nitrate hexahydrate (Ni (NO3)2·6H2O, 99.9 % purity, BDH), methanol, (CH3OH, 99 % purity, VWR), commercial gasoline (Woqod), Copper foam (>99 %, Latech) were used as received without any further purification. Fig. 1 illustrates a piston reactor unit to coat particles on a structured support. Method: As shown in Fig. 1, a four stroke 25cc internal combustion engine (Honda HHB25) is repurposed to be used as a piston reactor. The fuel unit was modified to use the reactive solution that consists of the mixture of 5 % wt of nickel nitrate hexahydrate along with methanol and gasoline with 1:1 ratio. The fuel consumption rate calculated was 1.5 g/min. The outlet of the engine was connected to a trapping unit where the structured supports can be placed. The liquid mixed with the air in the carburetor then supplied to the piston reaction chamber during the intake stroke and followed by the decomposition/combustion of the precursors inside the piston at the compression stroke to produce nanoparticles. The particles formed at high temperature and pressure leave the piston chamber during the exhaust stroke. The leaving particles were coated on the structured support placed in the trapping unit. Particles that are not trapped were captured on a waste collection system before the exhaust left for the local ventilation unit. After the coating step is completed (operating the piston for a given amount of time), the coated samples are removed from the trap. The color change confirms the presence of coating. The samples are then placed in an ethanol sealed beaker and sonicated for 30 min, to ensure that strong coating has been achieved. Afterward, the coated samples are washed with DI water then dried at room temperature. The produced coated samples are now ready for material characterization and catalytic activity testing. In example three different coated materials were introduced, one was the carbon coating on the Cu (carbon/Cu foam) foam using methanol-gasoline mixture as the fuel, next was the nickel coated on the Cu foam (Ni/Cu foam) and carbon paper (Ni/carbon paper) where nickel nitrate-methanol-gasoline mixture as the fuel. Notably, the disclosed technology can be used to add different types of active materials: carbon particles (C), monometallic particles (Cu, Ni, Co, Fe, etc.), bimetallic particles (CuNi, NiCo, CuCo, Pervoskites, etc.). Various types of potential precursor recipes that can be used in the fuels include metal salts (nitrates, acetates, chlorides), fuels (glycine, glucose, urea, citric acid, hydrazine), and solvents (ethanol, methanol, water). Moreover, the disclosed technology can be used to prepare different supports such as monolith structures, metal foams, cloth and fibers, metal foils, and additive manufacturing.

Material characterization and electrochemical activity testing: X-ray Diffractometer (Rigaku Ultima IV Multipurpose), operating with Cu-Kα radiation at 40 kV, over a range of 10-80° with a step size of 0.02° were used to identify the crystallinity and the phase composition of the coated material. Scanning Electron Microscopy (SEM) (Thermo Fisher Scientific) combined with Energy-Dispersive Spectroscopy (EDS) using Ultra Dry EDS and Pathfinder analysis software were used to analyze the morphology and elemental composition. Cross sectional SEM analysis was conducted to measure the thickness of coating. X-ray Photoelectron Spectroscopy (XPS) (Kratos, AXIS Ultra DLD) were used to understand the surface properties and the oxidation state of the coated structured support. The adhesiveness of the coating was measured by exposing the coated structure to ultrasound using VWR Ultrasonic cleaner (Model:97,043-994, 35 KhZ frequency and 144 WRF power). To identify the amount of Ni deposited on Cu foam, a 0.1 g of the sample was dissolved in 10 mL Nitric Acid (HNO3, 69 %) at 100 C under stirring for 15 min. The Cu and Ni content on the samples were quantified using detailed inductively coupled plasma optical emission spectrometry (Agilent,710 ICP-OES,USA). All electrochemical measurements were conducted using a standard three-electrode setup with a Gamry Reference 3000 potentiostat electrochemical workstation (Gamry, PA, USA) at room temperature in a 1.0 M KOH aqueous solution. A graphite rod served as the counter electrode, and an Ag/AgCl electrode was used as the reference electrode. Linear sweep voltammetry (LSV) polarization data were recorded at a scan rate of 5 mV/s with a step size of 2 mV. Please note that all potential values presented in this work have been iR-corrected (to eliminate the ohmic potential drop) and referenced to the reversible hydrogen electrode (RHE).

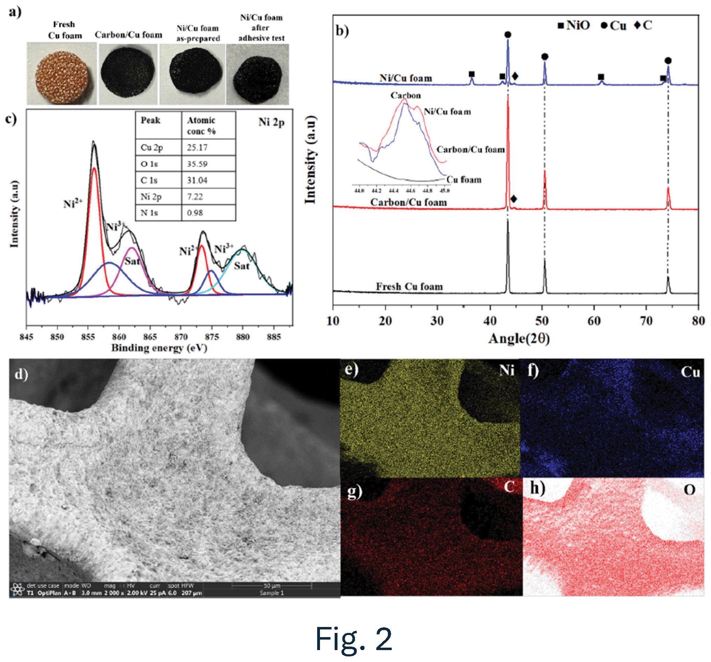

Results: Fig. 2a shows images of the fresh Cu foam and samples after coating them with carbon, and with Ni-carbon after the adhesion test. No particle loss was observed after 30 min of sonication indicating that coating properly bonded to the substrate. The color change confirms that coating took place on the metal foam. ICP-OES analysis determined the amount of Ni coated on the Cu foam to be 2.5 mg/cm², confirming the presence of a sufficient quantity of nickel on the substrate. The substrate mass loading on Cu foam aligns well with those reported in the literature. Moreover, previous studies have indicated that a nanocoating mass loading greater than 1 mg/cm² is necessary to ensure adequate adhesion between the catalytically active layer and the substrate. Lower loadings may result in poor adhesion, leading to the detachment of the catalyst layer during long-term operation or under high current densities in electrocatalytic applications.

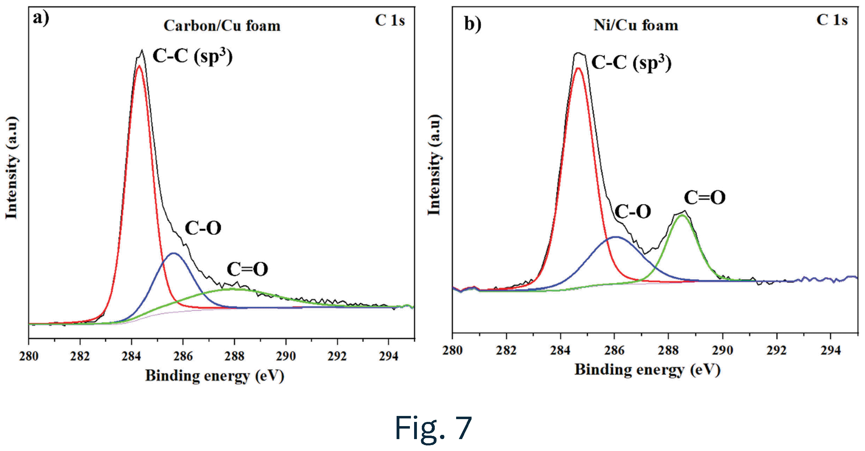

The crystallinity and the nature of the coated particles was identified using the XRD analysis shown in Fig. 2b The XRD spectrum of the fresh Cu foam shows three distinct peak 43.3∘, 50.4∘ and 74.08∘ corresponding to (111), (200) and (220) planes of cubic copper phase (PDF.00-004-0836). The carbon coated Cu foam shows the presence of carbon at 44.5∘, corresponds to (002) plane of graphitic carbon, which confirms the coating of carbon on the Cu foam. In Ni/Cu foam, few more peaks are observed beside the Cu ones at 36.8∘, 42.7∘, 62.04∘ and 73.9∘ corresponding to (101), (012), (110) and (012) planes of hexagonal NiO phase and a minor peak of carbon indexed at 44.5∘ corresponds to (002) plane of carbon. The inset figure zoomed between 44-45∘ confirms the presence of carbon coating in Ni/Cu foam and carbon/Cu foams. All the peaks are well indexed to carbon, NiO and Cu. No other peaks for impurities or from Ni precursor were detected. This confirms the complete decomposition of nickel nitrate to nickel particle and its deposition on the Cu foam samples. The crystallite size of the Ni particle, calculated from the (101) plane at 36.8∘ using the Debye-Scherrer equation, is 23 nm, which confirms that the particles formed are in the nanometer range. XPS analysis is performed to examine the detailed chemical composition and valence states of the formed Ni as shown in Fig. 2c. The existence of Ni, Cu, C, O and N are observed, and the atomic concentration confirms the presence of 7.22 % of Ni on the surface. The Ni 2p spectrum shows two main characteristic peaks centered at 855.8 eV and 873.4 eV with an energy separation of 17.6 eV corresponding to the Ni 2p3/2 and Ni 2p1/2 respectively provides the existence of NiO. The deconvolution of the two-spin orbit doublet with the first doublet at 855.4 eV and 872.9 eV and the second doublet at 858.1 eV and 874.8 eV attributed to the presence of Ni2+ and Ni3+, respectively, which is commonly observed during the synthesis of NiO. The composition and the oxidation state of the Ni 2p confirms the presence of NiO nanoparticle on the Cu substrate. Fig. 7 shows the XPS C 1 s spectrum for carbon/Cu foam and Ni/Cu foam with three distinct peaks. The main peak at 284.6 eV corresponds to the graphitized carbon (graphitic C==C) and the two relatively weak peaks corresponds to the carbon atoms attached to the functional groups which are centered at 286.1 eV and 288.1 eV attributed to the carbon in -OH group (C-O) and carbon in carbonyl group (C = O) respectively. The carbon source, primarily originating from the solvent, is consistent across both samples. Therefore, similar carbon spectrum would be expected. However, the C = O peak centered at 288.1 eV appears broader in the carbon/Cu sample, while it is comparatively sharper in the Ni/Cu sample. This difference may be attributed to the formation of more well-defined and uniform C = O groups in the Ni/Cu sample, likely resulting from enhanced combustion facilitated by the presence of nitrate species.

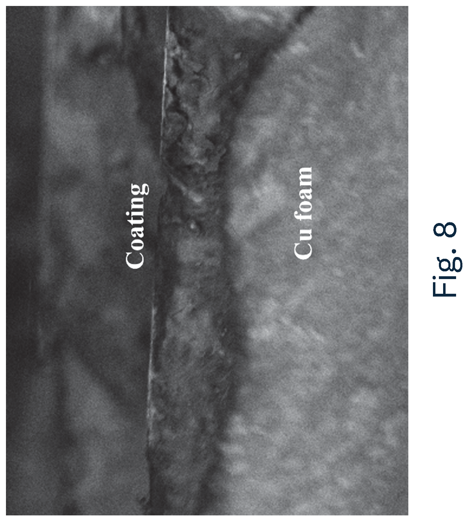

The morphology and uniformity of the coated particles on the support is shown in the SEM images in Fig. 2d-h. The SEM-EDX image in Fig. 2d shows the presence of fine nanometer sized particle on the foam. The uniformity of the Ni coating on the substrate is clear from the elemental mapping in Fig. 2e where the Ni is well coated uniformly as fine particles over the Cu substrate and mostly as single or few layered because the Cu substrate is still visible in the EDX mapping. EDX surface analysis showed that the elemental composition consisted of Ni, Cu, C and O to be 4.9 %, 38.4 %, 31.192 % and 25.5% respectively. The presence of carbon in Fig. 2c is obvious from the decomposition of methanol and gasoline; in fact, the carbon is not present as debris or clusters, instead, it forms a uniform layer, which could be a promising indication for its use as a conductive material in the field of electrocatalysis. The oxygen on the substrate can be from the NiO or the adsorbed oxygen or water molecule. These results confirm that the piston reactor can generate nanoparticles and allows the deposition on the structured supports. It also provides evidence of strong adhesion, existence, uniformity and the distribution of the coating of Ni and carbon nanoparticles on the Cu foam. Cross-sectional SEM analysis (Fig. 8) reveals an average coating thickness of approximately 16 µm on the foam struts.

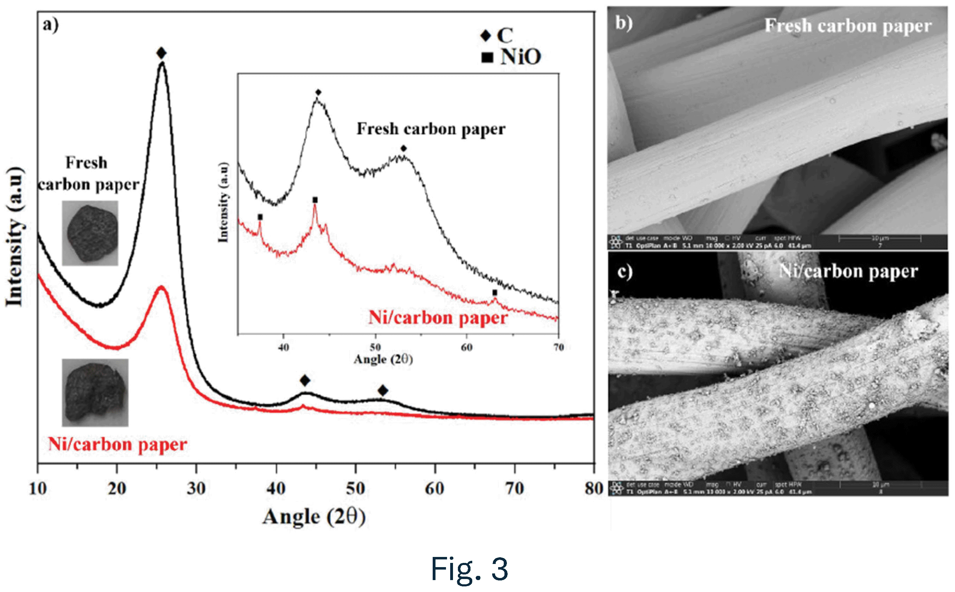

To verify the coating method flexibility on other substrate types and material, carbon paper was used as a support material to be coated with Ni-carbon nanoparticles. Fig. 3 shows images of the fresh and coated carbon paper. The black color did not allow visual inspection if coating took place or not. The XRD profile of the fresh carbon paper and Ni coated carbon paper is shown in Fig. 3a. The diffraction peaks for fresh carbon paper are observed at 25.7∘, 42.2∘ and 52.9∘ attribute to the (002), (100) and (004) planes in hexagonal structure of carbon fiber as confirmed by PDF.01-077-7164 [30]. In the XRD pattern of Ni/carbon paper, no peaks were clearly seen due to the high intensity of (002) plane of carbon. The zoomed profile between 35-70 _{°} in Fig. 3a inset clearly showed the emergence of distinct NiO peaks at 37.3∘, 43.4∘, and 63.02∘ confirms the presence of NiO on the carbon paper. The coating was further confirmed using the SEM analysis in Fig. 3b-c. Fresh carbon paper is a highly porous structure with three-dimensional network of smooth and clean carbon fibers having an average diameter of 5 µm. Fig. 3c shows the SEM image of the carbon paper after deposition of the Ni particles from the piston reactor. It is evident that small spherical particles in the size of 10-50 nm are deposited on the fibers of the carbon paper. These findings strongly support the versatility to use other support types and materials for coating, thereby validating the flexibility of the disclosed technology.

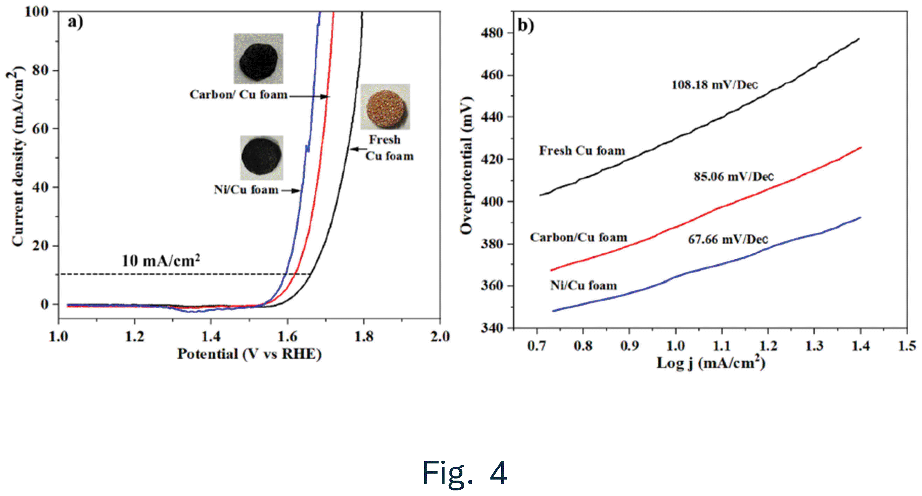

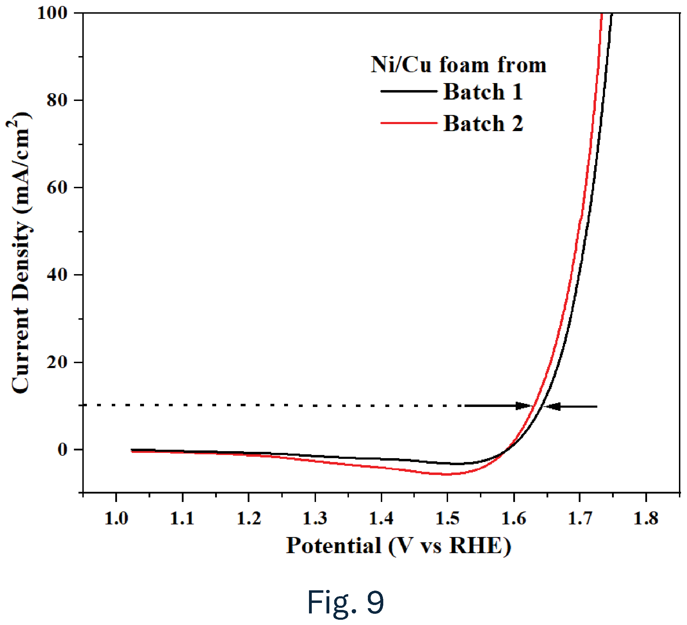

To evaluate the catalytic activity of the coated samples, the electrocatalytic oxygen evolution reaction (OER) was performed on the carbon (carbon/Cu foam) or Ni coated Cu foam (Ni/Cu foam) and compare the activity with fresh Cu foam tested at same condition. Fig. 4 shows the polarization curves obtained from linear sweep voltammetry for uncoated Cu and coated carbon or Ni particles Cu foam from the piston reactor. The OER polarization curve in Fig. 4a shows that coated Ni/Cu foam exhibits much better activity in terms of lower overpotential and favorable OER reaction kinetics. It is worth noting that Ni/Cu foam and carbon/Cu foam required an overpotential of 360 mV and 380 mV respectively to achieve an anodic current density of 10 mA/cm2, which is much lower when compared with commercial Cu foam (430 mV). To evaluate the reproducibility of the coating technique, a second batch of coated samples (Batch 2) was prepared using the same coating parameters as the initial batch (Batch 1). The electrochemical performance of both batches was compared, as shown in Fig. 9. The polarization curves revealed no significant differences between the two batches, with a measured overpotential variation of only 14 mV, which falls within the range of experimental error. These results demonstrate that the piston reactor has the potential to produce reproducible coatings on substrates.

The Tafel slope is a key parameter for evaluating an electrocatalyst's performance. A linear relationship between overpotential and log(current density) was observed for Ni/Cu foam and Cu foam, showing different slopes in Fig. 4b A lower Tafel slope suggests that the catalyst exhibits enhanced electrocatalytic activity. Tafel slope of Ni/Cu foam, Carbon/Cu foam and Fresh Cu foam are in the order of 67.66 mVdec-1, 85.06 mVdec-1 and 108.18 mVdec-1 respectively shows that Ni and carbon coated Cu foam shows faster kinetics for oxygen evolution reaction. These results demonstrate the promising potential of this high-temperature coating method to add a thin coating layer of carbon or nanoparticles on structured substrate to make catalysts with promising results for electrochemical applications.

Table 1 compares the performance of the coated material prepared using the disclosed technology with various particles coated onto Cu foam using conventional techniques for the oxygen evolution reaction (OER).

**Table 1: Comparison of recent high performance of Cu foam with metal coating for Oxygen Evolution Reaction (OER) in 1 M alkaline medium**

| Active material | Synthesis method | Overpotential @10 mA/cm2 | Tafel slope, Mvdec-1 |
|---|---|---|---|
| Nickel/Carbon | Piston reactor | 360 | 66.6 |
| Carbon | Piston reactor | 380 | 85.06 |
| MOF [Cu(OH)2] | solvothermal | 330 | 108 |
| CuO@CoOOH | anodic oxidation | 186 | 51.7 |
| Co0.1Fe0.4-HQ | Hydrothermal | 247 | 91 |
| Cu2S | rapid anion exchange reaction | 336 | 101 |
| Cu2S | Reduction | 373@50 mAcm2 | 192 |
| Fe-Co-S/Cu2O | Electrodeposition | 338@50 mAcm2 | 111 |
| Co@CoP2 | Hydrothermal | 310 | 94 |
| NiCo-NiCoO2 | thermal treatment | 327 | 118 |
| CuNi@Ni Core@shell | Electrodeposition | 280 | 257 |
| Cu(OH)2@CoNiCH NTs | thermal treatment | 288 @30mAcm-2 | |
| NiFe-LDH/CuS | Hydrothermal | 249@50mAcm-2 | 81.84 |
| Ni | Electrodeposition | 413 mV@50mAcm2 | 75 |
| Co81Ni19 | electrodeposition | 240 | 80.75 |
| NiCoP | | 309 | 42 |
| Ni-Co-S@CuO | electrodeposition | 309 | 62.8 |
| NiCo/Ni/CuO | electrodeposition | 246 | 37.9 |
| Cu2S-Co(OH)2 | sulfidation, etching, reduction | 268 | 78 |
| CoNiCu-LDH | Multiple step | 286 | 70.6 |

It should be understood that various changes and modifications to the presently preferred embodiments described herein will be apparent to those skilled in the art. Such changes and modifications can be made without departing from the spirit and scope of the present subject matter and without diminishing its intended advantages. It is therefore intended that such changes and modifications be covered by the appended claims.

## Claims

1. A piston reactor for depositing nanoparticles on structured substrates, the piston reactor comprising:
a repurposed internal combustion engine comprising:
a fuel unit,
a combustion chamber, and
an outlet,
a trapping unit,
wherein the fuel unit is configured to use a reactive solution and oxidizing agent,
wherein the reactive solution comprises a conventional engine fuel mixed with hydrocarbon-based organic solvents that can contain metal precursor,
wherein the outlet is coupled to the trapping unit,
wherein the combustion chamber is high pressure and high temperature, and
wherein structured supports are placed in the trapping unit.

2. The piston reactor of claim 1, wherein the reactive solution can comprised of 0 to 20 % wt of a metal salt precursor, between 0 to 10 %, for 0-5 %wt with conventional fuel and hydrocarbon solvent with a range of ratio between 0 and 1.

3. The piston reactor of claim 1, wherein the reactive solution and oxidizing agent may directly feed to combustion chamber or mixed using a mixing unit prior to the combustion chamber.

4. The piston reactor of claim 2, wherein the metal salt precursor decomposes and the hydrocarbon-based organic solvents combust in the combustion chamber to produce metal nanoparticles and carbon nanoparticles respectively.

5. The piston reactor of claim 4, wherein the carbon nanoparticles and metal nanoparticles exit the combustion chamber through the outlet during an exhaust stroke.

6. The piston reactor of claim 5, wherein the carbon nanoparticles and metal nanoparticles coat the structured supports in the trapping unit.

7. The piston reactor of claim 6, wherein any nanoparticles that do not coat the structured supports in the trapping unit are collected by a waste collection system.

8. The piston reactor of claim 1, wherein the reactive solution contain conventional fuel with organic solvent to prepare carbon nanoparticle and transition metal salts for metal nanoparticles.

9. The piston reactor of claim 1, wherein the organic solvent includes alcohols, ketones, ethers, esters and hydrocarbons.

10. The piston reactor of claim 1, wherein additives to enhance the combustion inside the combustion chamber are amines and amino acids, polyols, organic acids, carbohydrates and heterocyclic fuels.

11. A system for depositing carbon nanoparticles and metal nanoparticles on structured substrates, the system comprising:
a piston reactor for depositing nanoparticles on structured substrates, the piston reactor comprising:
an repurposed internal combustion engine, the internal combustion engine comprising:
a fuel unit with or without mixing unit,
a combustion chamber,
and
an outlet,
a trapping unit,
wherein the fuel unit is configured to use a reactive solution with or without mixing unit,
wherein the reactive solution comprises a metal precursor, solvent and/or additives,
wherein the outlet is coupled to the trapping unit,
wherein the combustion chamber is high pressure and high temperature, and
wherein structured supports are placed in the trapping unit.

12. A method of using a piston reactor for depositing carbon nanoparticles and metal nanoparticles on structured substrates, the piston reactor comprising an a fuel unit with or without mixing unit, a combustion chamber, and an outlet, the method comprising:
mixing a reactive solution and oxidative agent in the mixing unit,
supplying the reactive solution and air to the combustion chamber during an intake stroke,
decomposing a metal precursor in the combustion chamber,
combusting the metal precursor in the combustion chamber,
producing nanoparticles,
coating structured support with the nanoparticles.

13. The method of claim 12, wherein the fuel unit is configured to use the reactive solution.

14. The method of claim 12, wherein the reactive solution further comprises a transition metal salt precursor and a solvent that is a combination of conventional combustion engine fuel and organic solvent.

15. The method of claim 12, wherein the outlet is coupled to a trapping unit, and wherein structured supports are placed in the trapping unit.

16. The method of claim 12, wherein the combustion chamber is high pressure and high temperature.

17. The method of claim 12, wherein any nanoparticles exit the combustion chamber through the outlet during an exhaust stroke.

18. The method of claim 12, wherein any nanoparticles that do not coat the structured supports in a trapping unit are collected by a waste collection system.

19. The method of claim 14, wherein the transition metal salt precursor is one monometallic, bimetallic and multimetallic nanoparticles and the organic solvents for the carbon nanoparticles, wherein the solvent is one of the organic solvents , and wherein additives are one of amines and amino acids, polyols, organic acids, carbohydrates and heterocyclic fuels.
